# EUROPÄISCHE PATENTSCHRIFT

(11) **EP 0 792 031 B1**
(45) Veröffentlichungstag und Bekanntmachung des Hinweises auf die Patenterteilung: **04.05.2005**
(21) Anmeldenummer: 97102027.6
(22) Anmeldetag: 08.02.1997
(51) Int. Cl.: H04B 7/08, H01Q 3/24

(54) **Empfangsantennen-Scanning-Diversitysystem für den Meterwellenbereich für Fahrzeuge**
Receiving antenna scanning system in the VHF region for cars with controllable switching unit
Antenne de réception en utilisation de technique diversité à balayage aux signaux pour la région VHF

(30) Priorität: 24.02.1996 DE 19607045
(43) Veröffentlichungstag der Anmeldung: 27.08.1997
(73) Patentinhaber: FUBA Automotive GmbH & Co. KG, 31162 Bad Salzdetfurth (DE)
(72) Erfinder: Lindenmeier, Heinz, 82152 Planegg (DE); Reiter, Leopold, 82205 Gilching (DE); Hopf, Jochen, 85540 Haar (DE)

(56) Entgegenhaltungen:
- EP-A- 0 270 188
- EP-A- 0 620 657
- DE-A- 4 403 612
- US-A- 4 499 606
- LINDENMEIER ET AL: 'Radio-Empfang aus der Heckscheibe' FUNKSCHAU Bd. 61, Nr. 8, 07 April 1989,

## Beschreibung

Die Erfindung geht aus von einer Antennen-Scanningdiversity-Empfangsanlage für den Meterwellenbereich, z.B. für den UKW-Bereich, zur Elimination von Empfangsstörungen, wie sie z.B. in Funkschau 8/1989, "Radio-Empfang aus der Heckscheibe" angegeben ist.

In dieser Scanningdiversityanlage werden die Empfangssignale von vier UKW-Antennen, welche aus aufgedruckten Leitern auf der Heckscheibe eines Fahrzeugs gebildet sind, von einen Diversity-Prozessor, welcher in unmittelbarer Nähe an der Antennenanlage angebracht ist und an dessem Ausgang sich die Antennenanschlußstelle befindet, ausgewählt, und dem Empfänger über eine Antennenleitung zugeführt. Zur Erkennung von gestörten Hochfrequenzsignalen wird das im Empfänger vorliegende und ebenso gestörte Zwischenfrequenzsignal dem Diversity-Prozessor zur Störungserkennung zugeführt. Im Diversity-Prozessor befindet sich ein Detektor zur Feststellung von Störungen im Empfangssignal, welcher mit Hilfe eines von ihm erzeugten Signals den Antennen-Auswahlschalter jeweils in eine andere Schaltstellung umschaltet. Der Prozessor schaltet zyklisch die Antennensignale zum Empfänger durch, bis ein Signal mit hinreichend kleiner Störung gefunden ist.

Nachteilig an einer Anordnung dieser Art ist die Unterbringung des Störungsdetektors am Ort der Antennenanlage. Die Auswahl der Antennensignale ist mit Umschaltvorgängen verbunden, welche, je nach Empfänger, zu mehr oder weniger hörbaren Störungen führen.

Aufgabe eines Empfangsantennen-Scanningdiversitysystems nach dem Oberbegriff des Anspruchs 1 ist es deshalb, zur Verbesserung des Empfangs dem Empfänger eine Vielzahl von Antennensignalen anzubieten und dabei die Umschaltstörungen bei möglichst kleinem Aufwand an Leitungen zwischen der Antennenanlage und dem Empfänger so klein wie möglich zu gestalten.

Vorteilhaft an der Anordnung nach der Erfindung ist die Einbeziehung des Störungsdetektors in den Empfänger. Dadurch können Maßnahmen zur Unterdrückung hörbarer Geräusche, welche mit dem Umschaltvorgang in Verbindung stehen, z.B. durch Stummschalten des Niederfrequenzverstärkers während des Umschaltvorgangs, angewandt werden. Damit ist insgesamt eine bessere Abstimmung zwischen der Antennendiversityanlage und dem Empfänger möglich. Antennendiversityanlagen in der beschriebenen Form sollen zusammen mit unterschiedlichen Empfängern funktionieren. In der Regel legt der Fahrzeughersteller die Antennenanlage fest, ohne den Einsatz eines bestimmten hierfür optimierten Empfängertyps vorzusehen.

Der nach dem oben angegebenem Stande der Technik arbeitende Diversity-Prozessor ermöglicht nicht ohne weiteres koordinierte Maßnahmen zur Stummschaltung im Empfänger. Ein weiteres Problem ist der technische Aufwand, welcher mit der Einführung einer weiteren Verbindungsleitung zwischen dem Diversity-Prozessor und dem Empfänger verbunden ist, würde man die Umschaltpulse zur kurzfristigen Stummschaltung des Empfängers während des Umschaltvorgangs diesem zuleiten. Zwar sind in der DE 4403612 Maßnahmen beschrieben, auf welche Weise Umschaltstörungen vermieden werden können. Diese sind jedoch aufwendig und aus diesem Grunde wenig vorteilhaft.

Aus der Druckschrift EP-A-0 620 657 ist ein Antennendiversitysystem für den Empfang digitaler Signale bekannt. Ein digitales Empfangssystem hat den Nachteil, daß es für den Empfang analoger Rundfunksignale, wie z.B. UKW-Rundfunksignale, grundsätzlich nicht geeignet ist. Auch die Art der Störungserkennung mit Hilfe der "bit-error detection unit 55" und des control circuit 56", welche beide außerhalb des Empfängers ("receiving unit 54") untergebracht sind, ist für die hier vorliegende Anwendung ungeeignet. Weiterhin ist aus der US-A-4 499 606 ein Antennendiversitysystem für den Empfang von FM-Rundfunksignalen bekannt, welches Umschaltstörungen mit Hilfe speziell gestalteter Antennenumschalter dadurch reduziert, daß diese ein sehr schnelles Umschalten erlauben. Wesentlich ist hierbei, daß eine schnelle Umschaltung zwar notwendig, jedoch für störungsfreies Hören nicht hinreichend ist, weil insbesondere der mit der Antennenumschaltung verbundene Phasensprung des zum Empfänger gelangenden Signals auch bei extrem schneller Umschaltung im frequenzmodulierten System zu hörbaren Frequenzstörhubpulsen führt. Die "Decision and Control Unit", in welcher die Umschaltentscheidung getroffen wird, ist außerhalb des Empfängers angeordnet und Maßnahmen zur Vermeidung der verbleibenden Umschaltstörungen können im Empfänger nicht vorgenommen werden. Ferner ist aus der Druckschrift EP-A -0 270 188 606 ein weiteres Antennendiversitysystem für den Empfang für den FM-Rundfunksignalen bekannt, bei welchem der Diversityprozessor außerhalb des Empfängers untergebracht und derart gestaltet ist, daß durch Einsatz einer speziellen Logik, ein weniger gestörtes Antennensignal häufige aus den verfügbaren Signalen angewählt wird Nachteilig ist auch hier, daß die genannten, durch die Umschaltung selbst resultierenden verbleibenden Störungen nicht vermieden sind. Wesentlich vorteilhafter ist es - gemäß der vorliegenden Erfindung - dem Empfängerhersteller durch Einbringung des Störungs-Detektors in den Empfänger die Möglichkeit zu bieten, das Anzeigesignal bei Auftreten einer Empfangsstörung unmittelbar und ohne Zeitverzögerung zu Maßnahmen zu verwenden, z.B. um durch Stummschalten oder weiches Stummschalten den Umschaltvorgang unhörbar zu gestalten. In der Praxis zeigt sich, daß sich ein wirkungsvolles Unterdrücken von Umschaltgeräuschen nur dann erreichen läßt, wenn die Störungserkennung und die Stummschaltungsmaßnahmen sorgfältig in einer zusammenhängenden Konzeption aufeinander abgestimmt sind. Das vom Empfänger zur Antennenanlage ausgehende Signal ist somit extrem einfach und beschränkt sich auf logische Signale, welche auf der Seite der Antennenanlage auf einfache Weise ausgewertet werden können und lediglich einen Umschaltvorgang herbeiführen, welcher dann keine wahrnehmbaren Störungen erzeugt.

Nach der vorliegenden Erfindung sendet somit der Empfänger bei Erkennen einer Störung im Empfangssignal lediglich ein Anzeigesignal oder ein daraus abgeleitetes Signal aus. Dieses kann auf unterschiedliche Weise gestaltet werden und am Ort der Antennenanlage leicht auf einfache Weise in ein Schaltsignal übergeführt werden, welches lediglich den Schaltzustand in der Antennenanlage mit steuerbarer Schalteinrichtung bewirkt. Die Umschaltzeiten sind aufgrund der Verfügbarkeit schneller elektronischer Schalter sehr gering und eine weitere Anpassung der Antennenanlage mit steuerbarer Schalteinrichtung an einen speziell hierfür vorgesehenen Empfänger ist nicht notwendig.

Im folgenden wird die Erfindung anhand der Figuren beschrieben. Es zeigen:
- Fig. 1:: Antennenanlage mit steuerbarer Schalteinrichtung 21 und Empfänger 20 mit einer Antennenleitung 12 und einer getrennten Signalleitung 24 zur Übertragung des Anzeigesignals 10 bzw. von daraus abgeleiteten Steuersignalen 26 vom Empfänger 20 zur Antennenanlage 21.
- Fig. 2:: Antennenanlage 21 und Empfänger 20 mit Einrichtungen zur Übertragung von Steuersignalen über die Antennenleitung 12, die damit die Funktion der Signalleitung 24 mit übernimmt.

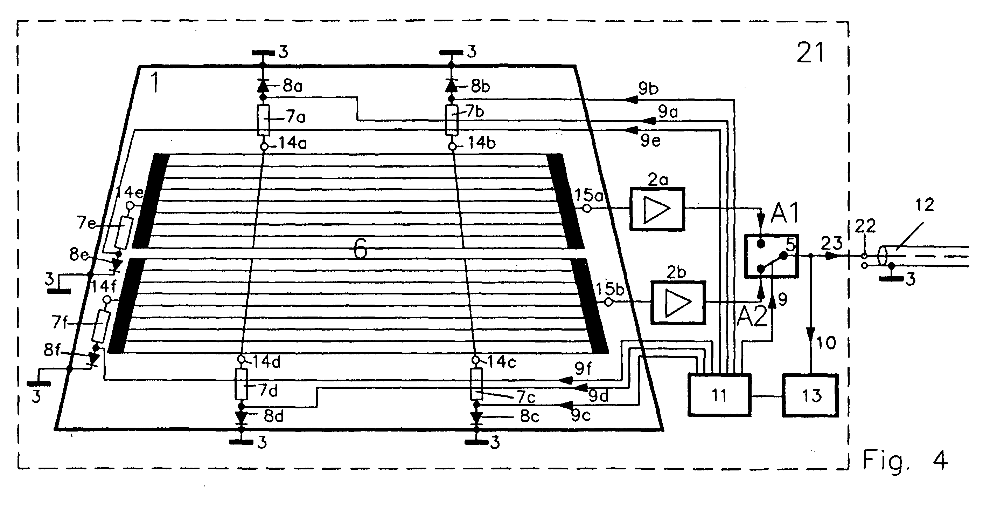

- Fig. 3:: Antennenanlage 21 mit im Störungsfall hochgetastetem Zwischenfrequenzsignal 19 als Signalburst 26, welches über ZF-Filter selektiv über die Antennenleitung 12 übertragen wird.
- Fig. 4:: Beispiel einer Antennenanlage 21 unter Benutzung der Heizleiter 6 auf der Heckfensterscheibe 1 eines Kraftfahrzeugs mit einem Auswahlschalter 5 für die Antennensignale A₁ und A₂ und Umschaltern 8 für die Beschaltung der Antennenteilanschlüsse 14 mit unterschiedlichen Impedanzen 7.
- Fig. 5:: Wie Fig. 4, jedoch mit einem elektronisch steuerbaren Auswahlschalter 5 für die Beschaltung mit unterschiedlichen Impedanzen 7d₁, 7d₂ und 7d₃.
- Fig. 6:: Antennenanlage 21 mit einem Verstärkerausgang an der Antennenanschlußstelle 22 und Beschaltung der anderen Antennenteilanschlüsse 14 mit elektronischen Umschaltern 8 zur Beschaltung mit unterschiedlichen Impedanzen 7.

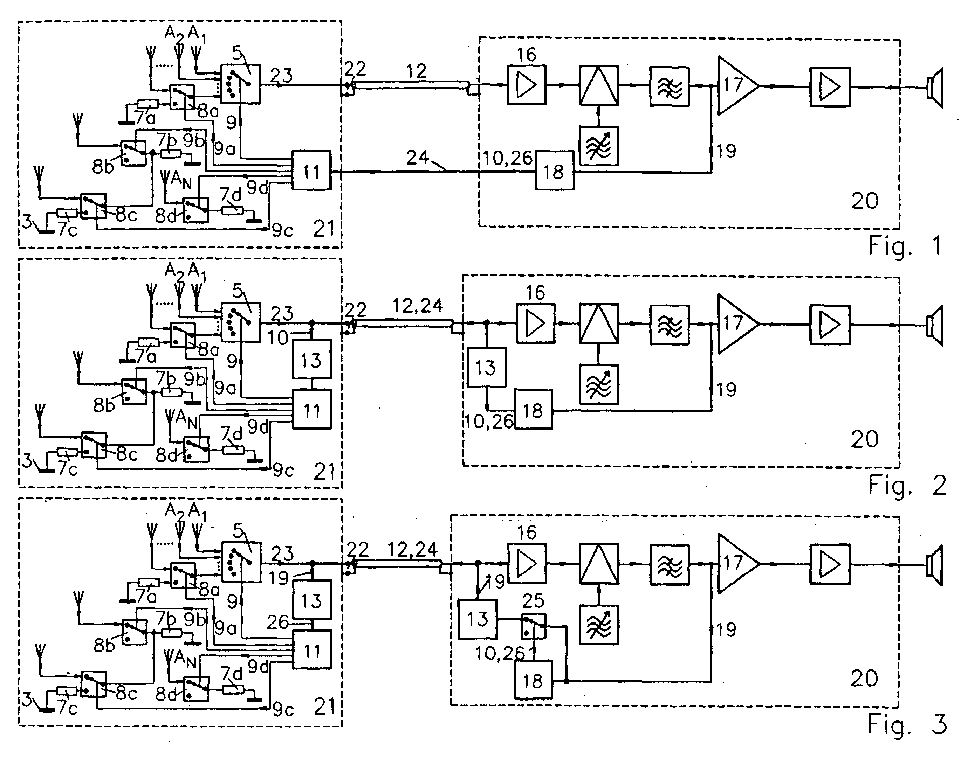

In dem Scanning-Diversitysystem nach Fig. 1 wird erfindungsgemäß das Auftreten einer Störung mit Hilfe des Anzeigesignals 10 der Antennenanlage mit steuerbarer Schalteinrichtung 21 über eine Signalleitung 24 mitgeteilt. Vorteilhaft ist hierbei, daß bei großer Auswahl von Antennensignalen nur eine zusätzliche Leitung in Form der Signalleitung 24 notwendig ist.

Befinden sich die Antennen im Verhältnis zu den geometrischen Abmessungen der Antennenanlage 21 weit entfernt vom Empfänger 20, so ist es gemäß der vorliegenden Erfindung vorteilhaft, mehrere Leitungen zum Empfänger 20 zu vermeiden. Besonders bedeutsam ist dies z.B. bei Kraftfahrzeugen, auf deren Heckscheibe ein Mehrantennensystem aufgebracht ist und somit nur eine ein Empfangssignal 23 führende Antennenleitung 12 von der Antennenanlage 21 zum Empfänger 20 im Frontbereich des Fahrzeugs notwendig ist. Zusätzliche Antennenleitungen würden zusätzliche Kosten für hochfrequenztaugliche Steckverbindungen und die zusätzlichen Leitungen selbst mit sich bringen. Außerdem wirken sich die Steckverbindungen als zusätzliche Fehlerquellen des Systems aus, welche die Betriebssicherheit mindern.

Das Anzeigesignal 10 kann in einem einfachen Fall als binäres Signal 26 ausgeführt sein, welches das Auftreten der Störung so lange anzeigt, wie diese vorhanden ist. Um eine besonders schnelle Schaltreaktion in der steuerbaren Schalteinrichtung 21 hervorzurufen, ist es in einer vorteilhaften Ausführungsform der Erfindung möglich, aus der Ansprechflanke des binären Signals durch Differentation des Anzeigesignals 10 einen Puls 26 zu gewinnen. Durch Gestaltung eines geeigneten Pulses, dessen spektrale Energie entweder keinen Beitrag im Frequenzbereich der Empfangssignale bildet oder dessen zeitliche Dauer so kurz ist, daß er physiologisch nicht wahrgenommen wird, kann dieser Puls auf der Antennenleitung 12 zur Antennenanlage mit Schalteinrichtung 21 gesendet werden, ohne Störungen im Empfang zu bewirken.

Soll das Anzeigesignal 10 z.B. über eine mit Gleichspannung vorbelegte Leitung oder eine andere Signalleitung 24 zur Antennenanlage mit steuerbarer Schalteinrichtung 21 übertragen werden, so ist es in einer weiteren vorteilhaften Ausgestaltung der Erfindung möglich, dieses Signal als Hüllkurve eines hochfrequenten Signalbursts 26 zu übertragen und diese Hüllkurve in der Antennenanlage 21 wiederzugewinnen, um den Umschaltvorgang auszulösen.

Die Gewinnung der hochfrequenten Schwingung zur Bildung eines hochfrequenten Pulses kann durch einen Hochfrequenzgenerator (27) im Empfänger (20) erfolgen. Sein Signal kann durch Bewertung mit dem Anzeigesignal (10) oder einem daraus abgeleiteten Steuersignal (26) zur Antennenanlage übertragen und in der steuerbaren Schalteinrichtung (21) ausgewertet und der Schalteinrichtung (11) zugeführt werden.

Die Gewinnung der hochfrequenten Schwingung zur Bildung des Bursts kann auf besonders einfache Weise durch das Zwischenfrequenzsignal 19 des Empfängers 20 selbst gebildet sein. Hierfür wird das zwischenfrequente Signal 19 im Empfänger 20 nicht nur dem Störungsdetektor 18 zugeführt, sondern auch über einen elektronischen Schalter 25 und die Signalleitung 24 vom Empfänger 20 zur Antennenanlage 21 geleitet.

In einer besonders vorteilhaften weil besonders preisgünstigen Ausführungsform der Erfindung ist die hochfrequente Antennenleitung 12 gleichzeitig als Signalleitung 24 verwendet. In diesem Fall ist es notwendig, den Empfängereingang vor dem in ihm gebildeten Anzeigesignal 10 und von diesem gegebenenfalls verursachten Störungen zu schützen. Dies geschieht auf vorteilhafte Weise frequenzselektiv mit Hilfe von Selektionsschaltungen 13, welche auf der Empfängerseite zur Einkopplung und auf der Seite der Antennenanlage 21 zur Auskopplung des Anzeigesignals 10 dienen. In dem oben beschriebenen Fall der Übertragung des zwischenfrequenten Signalbursts 26 zur Anzeige von Störungen können sehr vorteilhaft serienmäßige Zwischenfrequenzfilter verwendet werden.

In der Antennenanlage mit steuerbarer Schalteinrichtung 21 wird mittels der Selektionseinrichtung 13 das Signal 26 aus dem Empfangssignal 23 herausgefiltert und der Schalteinrichtung 11 zugeführt. Am Ausgang der Schalteinrichtung 11 werden Steuersignale 9 erzeugt, welche die Zustände der Auswahlschalter 5 bzw. der Umschalter 8 in der Antennenanlage mit Schalteinrichtung 21 verändern, wodurch ein anderes Empfangssignal 23 zum Empfänger 20 gelangt. Der Vorteil dieser Anordnung liegt in der freien Gestaltbarkeit durch spezielle Programmierung der Schalteinrichtung 11, welche einen bestimmten Ablauf für die Bildung der dem Empfänger zugeführten Empfangssignale ermöglicht. In einer einfachsten Form werden die verschiedenen Schaltstellungen der Umschalter 8 in einer vorgegebenen Weise zyklisch wiederholt eingestellt.

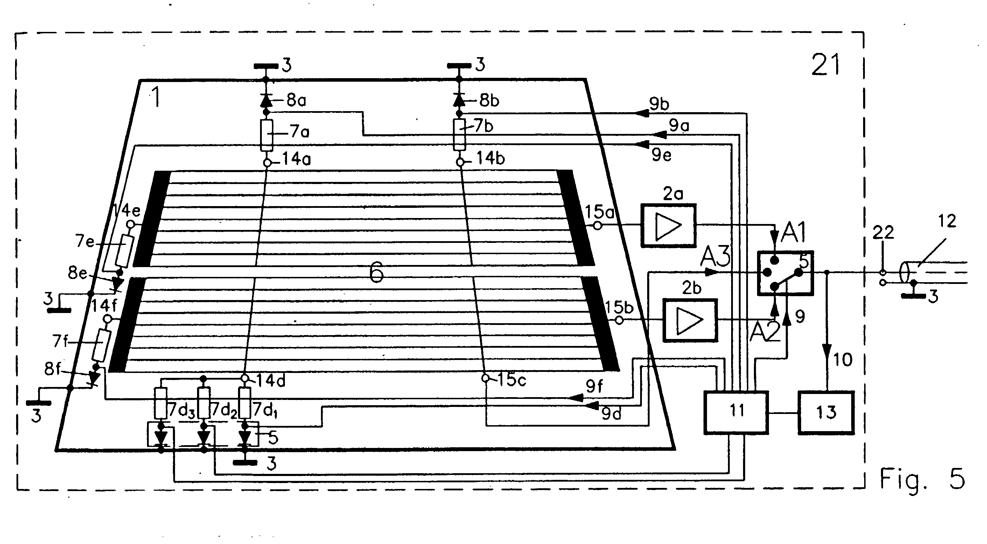

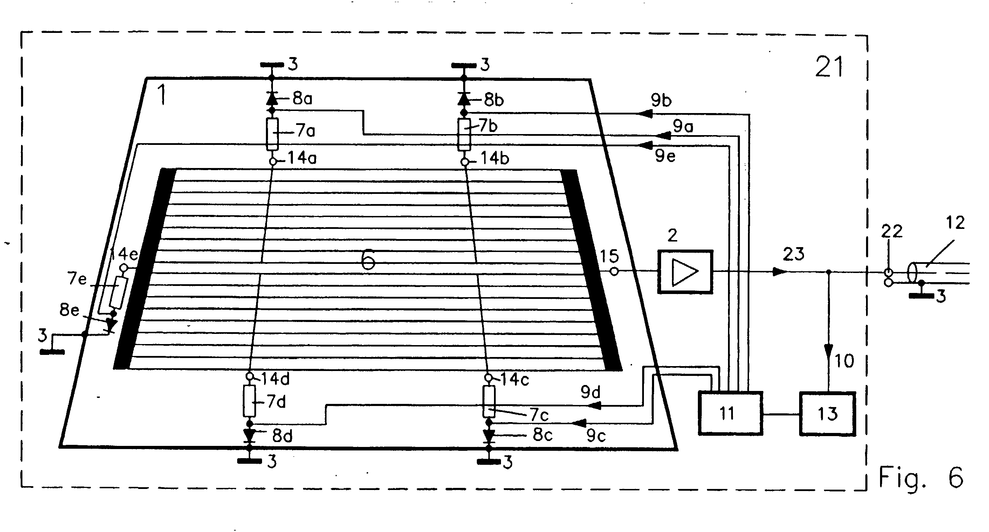

In den Figuren 4 bis 6 werden praktische Ausführungsformen der Erfindung an Beispielen von Antennenanlagen mit steuerbarer Schalteinrichtung 21 gezeigt, welche im wesentlichen durch das Heizfeld 6 in der Fensterscheibe 1 eines Fahrzeugs gebildet sind. In Fig. 4 und 5 sind verschiedene Antennenteilanschlüsse 14 und 15 durch Anschlüsse an das Heizfeld hergestellt, wobei an 2 Antennenteilanschlüssen 15a und 15b Verstärker 2a und 2b zur Bildung aktiver Antennen angeschlossen sind. Diese Verstärker 2 sind an ihrem Ausgang mit dem Antennenauswahlschalter 5 verbunden, welcher einen der Verstärkerausgänge jeweils zur Antennenanschlußstelle 22 durchschaltet. Dieser elektronisch steuerbare Auswahlschalter 5 wird von der Schalteinrichtung 11 über das Steuersignal 9 angesteuert. Zur weiteren Gestaltung unterschiedlicher Empfangssignale an der Antennenanschlußstelle 22 sind die übrigen Antennenteilanschlüsse 14a bis f mit Impedanzen 7a bis f beschaltet, welche bei geschlossenen elektronischen Schaltern 8a bis 8f jeweils die Antennenteilanschlüsse belasten. Vorzugsweise werden dabei Reaktanzen verwendet, um keine Signalbedämpfung zu bewirken. Diese elektronischen Schalter 8a bis 8f werden ebenfalls von der Schalteinrichtung 11 angesteuert. Auf diese Weise können in dem gezeigten Beispiel 64 unterschiedliche Antennensignale an der Antennenanschlußstelle 22 erzeugt werden.

In Fig. 5 ist beispielhaft am Antennenteilanschluß 14d dargestellt, wie steuerbare Umschalter 8 durch einen Auswahlschalter 5 ersetzt werden können, um über den Auswahlschalter unterschiedliche Impedanzen 7d₁, 7d₂ bzw. 7d₃ an den Antennenteilanschluß 14d anzuschalten.

## Patentansprüche

1. Empfangsantennen-Scanningdiversitysystem für den Meterwellenbereich, z.B. für den UKW-Bereich in Fahrzeugen , mit einer Antennenanlage (21) mit steuerbarer Schalteinrichtung und einem über eine Antennenleitung angeschlossenen, entfernt angebrachten Empfänger und einem Störungsdetektor (18), der bei Auftreten einer Empfangsstörung im Empfangssignal (23) bzw. im ZF-Signal (19) diese durch ein Anzeigesignal anzeigt, wobei die Antennenanlage (21) mit steuerbarer Schalteinrichtung sowie eine gemeinsame Antennenanschlußstelle (22) vorhanden sind, an die der Empfänger (20) über die Antennenleitung (12) und über weitere Leitungen angeschlossen ist, und wobei die Empfangseigenschaften der Antennenanlage (21) mit Änderung der Schaltstellungen der steuerbaren Schalteinrichtung (11) verändert werden, so daß jeweils ein verändertes Empfangssignal (23) an der Antennenanschlußstelle (22) vorliegt, und das Anzeigesignal (10) der Schalteinrichtung (11) zugeführt ist und bei Auftreten einer Empfangsstörung im Empfangssignal (23) oder im ZF-Signal (19) die steuerbare Schalteinrichtung (11) eine geänderte Schaltstellung einnimmt und im Zusammenspiel mit dem Störungsdetektor (18) die Änderung von Schaltstellungen solange fortgeführt wird, bis ein hinreichend störungsarmes Empfangssignal an der Antennenanschlußstelle (22) vorliegt und der Störungsdetektor (18) keine Störung anzeigt,
**dadurch gekennzeichnet,**
**daß** der Störungsdetektor (18) im Empfänger (20) untergebracht ist und die Antennenanlage (21) mit steuerbarer Schalteinrichtung mehrere Einzelantennen (A1, A2..) bzw. Antennenteile und die Schalteinrichtung (11) mit steuerbaren Auswahlschaltern (5) und/oder steuerbaren Umschaltern (8) enthält und eine zwischen der Antennenanlage (21) mit steuerbarer Schalteinrichtung und dem Empfänger (20) befindliche Leitung (24) als Übertragungsweg für unterschiedliche Signale ausgebildet ist, über die das Anzeigesignal (10), , der Antennenanlage (21) mit steuerbarer Schalteinrichtung zur Ansteuerung der Schalteinrichtung (11) zugeführt ist, und bei Auftreten einer Empfangsstörung im Empfangssignal (23) oder im ZF-Signal (19) mindestens einer der Schalter (5, 8) eine geänderte Schaltstellung einnimmt und Selektionsmaßnahmen getroffen sind, sodaß die zusätzliche Übertragung des Anzeigesignals (10) auf dieser Leitung keine Störungen hervorruft.

2. Empfangsantennen-Scanningdiversitysystem nach Anspruch 1,
**dadurch gekennzeichnet,**
**daß** das im Empfänger (20) vorhandene Anzeigesignal (10) dazu verwendet wird, bei Auftreten einer Empfangsstörung den Umschaltvorgang ohne Zeitverlust unhörbar zu machen, indem es ein Stummschalten des Empfängers bzw. ein weiches Umschalten bewirkt.

3. Empfangsantennen-Scanningdiversitysystem nach Anspruch 2,
**dadurch gekennzeichnet,**
**daß** die Störungserkennung und die Stummschaltungsmaßnehmen in einer zusammenhängenden Konzeption aufeinander abgestimmt sind.

4. Empfangsantennen-Scanningdiversitysystem nach Anspruch 1 bis 3,
**dadurch gekennzeichnet,**
**daß** aus dem Anzeigesignal (10) zur Ansteuerung der Schalteinrichtung (11) ein binäres Steuersignal (26) abgeleitet ist (Fig.1).

5. Empfangsantennen-Scanningdiversitysystem nach Anspruch 4,
**dadurch gekennzeichnet,**
**daß** aus dem Anzeigesignal (10) durch Differentiation der Ansprechflanke ein Puls (26) zur Ansteuerung der Schalteinrichtung (11) gewonnen wird.

6. Empfangsantennen-Scanningdiversitysystem nach einem der Ansprüche 4 oder 5,
**dadurch gekennzeichnet,**
**daß** ein Hochfrequenzgenerator (27) im Empfänger (20) vorhanden ist und sein Signal durch Bewertung mit dem Anzeigesignal (10) oder einem daraus abgeleiteten Steuersignal (26) einen hochfrequenten Signalburst (28) bildet, welcher in der Antennenanlage mit steuerbarer Schalteinrichtung (21) ausgewertet wird und zum Zweck der Ansteuerung der Schalteinrichtung (11) zugeführt wird.

7. Empfangsantennen-Scanningdiversitysystem nach Anspruch 6,
**dadurch gekennzeichnet,**
**daß** die hochfrequente Schwingung im Signalburst durch das Zwischenfrequenzsignal (19) des Empfängers dadurch gebildet ist, daß das Anzeigesignal (10) über einen elektronischen Schalter (25) das zwischenfrequente Signal des Empfängers zur Signalleitung (24) durchschaltet (Fig. 3).

8. Empfangsantennen-Scanningdiversitysystem nach einem der Ansprüche 1 bis 3,
**dadurch gekennzeichnet,**
**daß** das Anzeigesignal (10) die Schaltzustände in Form einer Gleichspannungskodierung übermittelt (Fig.1).

9. Empfangsantennen-Scanningdiversitysystem nach einem der Ansprüche 1 bis 8,
**dadurch gekennzeichnet,**
**daß** die Antennenleitung (12) gleichzeitig die Signalleitung (24) ist und das Anzeigesignal (10) dem hochfrequenten Empfangssignal (23) am Eingang des Empfängers überlagert und der Antennenanlage (21) mit steuerbarer Schalteinrichtung über die Antennenleitung (12) zugeführt ist, und daß Maßnahmen getroffen sind, daß das Anzeigesignal (10) auf der Antennenleitung (12) im Empfänger (20) keine Störungen hervorruft.

10. Empfangsantennen-Scanningdiversitysystem nach Anspruch 9,
**dadurch gekennzeichnet,**
**daß** in der Antennenanlage (21) mit steuerbarer Schalteinrichtung zwischen die Antennenleitung (12) und die Schalteinrichtung (11) eine Selektionsschaltung (13) geschaltet ist und im Empfänger (20) zwischen Störungsdetektor (18) und der Antennenleitung (12) ebenfalls eine Selektionsschaltung (13) geschaltet ist, welche jeweils frequenzselektiv nur für das Anzeigesignal (10) oder daraus abgeleitete Signale (26) oder (28) durchlässig sind und daß die Antennenleitung mit ihrer Impedanz nicht wesentlich belastet ist (Fig.2 und 3).

11. Empfangsantennen-Scanningdiversitysystem nach einem der Ansprüche 1 bis 10,
**dadurch gekennzeichnet,**
**daß** die in der Antennenanlage (21) mit steuerbarer Schalteinrichtung enthaltene Schalteinrichtung (11) an ihrem Ausgang Steuersignale (9) bildet, welche die Schaltstellungen der Auswahlschalter (5) bzw. Umschalter (8) einstellt und daß die Steuersignale (9) bei Anzeige einer Störung durch den Störungsdetektor (18) derart verändert werden, daß mindestens einer der Schalter (5, 8) schaltet.

12. Empfangsantennen-Scanningdiversitysystem nach Anspruch 11,
**dadurch gekennzeichnet,**
**daß** die Schalteinrichtung (11) an ihren Ausgängen Steuersignale (9) derart bildet, daß verschiedene Schaltstellungen der Auswahlschalter (5) und Umschalter (8) in einer vorgegebenen Weise zyklisch wiederholt eingestellt werden.

13. Empfangsantennen-Scanningdiversitysystem nach einem der Ansprüche 1 bis 7,
**dadurch gekennzeichnet,**
**daß** die Signalleitung (24) gleichzeitig der Gleichspannungsversorgung der steuerbaren Schalteinrichtung (11) dient.

14. Empfangsantennen-Scanningdiversitysystem nach einem der Ansprüche 1 bis 7,
**dadurch gekennzeichnet,**
**daß** die Signalleitung (24) durch eine mehrfach genutzte Lichtleitfaser gebildet ist.

15. Empfangsantennen-Scanningdiversitysystem nach einem der Ansprüche 1 bis 14,
**dadurch gekennzeichnet,**
**daß** an der Antennenanschlußstelle (22) ein Auswahlschalter (5) vorhanden ist, der die Ausgänge unterschiedlicher Einzelantennen A1, A2 .. mit der Antennenanschlußstelle (22) verbindet (Fig. 4, 5).

16. Empfangsantennen-Scanningdiversitysystem nach einem der Ansprüche 1 bis 15,
**dadurch gekennzeichnet,**
**daß** Antennenteilanschlüsse (14) vorhanden sind, die durch Umschalter (8) mit unterschiedlichen Impedanzen (7) belastet werden.

17. Empfangsantennen-Scanningdiversitysystem nach einem der Ansprüche 1 bis 16,
**dadurch gekennzeichnet,**
**daß** Antennenteilanschlüsse (14) vorhanden sind, die durch Umschalter (8) verbunden werden (Fig.1).

18. Empfangsantennen-Scanningdiversitysystem nach Anspruch 16,
**dadurch gekennzeichnet,**
**daß** zur Beschaltung der Antennenteilanschlüsse (14) mit unterschiedlichen Impedanzen (7) elektronsich steuerbare Umschalter (8) verwendet werden, welche von der Schalteinrichtung (11) auf Durchlaß bzw. Sperrung geschaltet werden.

19. Empfangsantennen-Scanningdiversitysystem nach einem der Ansprüche 1 bis 18,
**dadurch gekennzeichnet,**
**daß** Antennen im wesentlichen durch das Heizfeld (6) in der Fensterscheibe (1) eines Fahrzeugs gebildet sind und verschiedene Antennenteilanschlüsse (14) bzw. (15) durch Anschlüsse an dieses Heizfeld (6) gebildet sind und an einige dieser Antennenteilanschlüsse (15) Verstärker (2) zur Bildung aktiver Antennen angeschlossen sind, welche mit ihrem Ausgang mit dem Auswahlschalter (5) verbunden sind (Fig. 5).

20. Empfangsantennen-Scanningdiversitysystem nach Anspruch 19,
**dadurch gekennzeichnet,**
**daß** die anderen Antennenteilanschlüsse (14) mit Hilfe von steuerbaren elektronischen Umschaltern (8) mit unterschiedlichen Impedanzen (7), vorzugsweise mit Reaktanzen, belastet werden.

21. Empfangsantennen-Scanningdiversitysystem nach Anspruch 20,
**dadurch gekennzeichnet,**
**daß** mindestens einer der Antennenteilanschlüsse (14) mit Hilfe eines Auswahlschalters (5) mit unterschiedlichen Impedanzen (7) belastet wird (Fig. 5).

## Claims

1. Receiving aerial scanning diversity system for the metre wavelength range, e.g. for the VHF range in motor vehicles, having an aerial array (21) with a controllable switching device and a receiver arranged at a remote location connected through an aerial lead, and an interference detector (18) which in the event of reception interference in the reception signal (23) or in the IF signal (19) indicates this by means of an indicator signal, there being both the aerial array (21) with a controllable switching device and a common aerial connection point (22) to which the receiver (20) is connected through the aerial lead (12) and other leads, and the reception characteristics of the aerial array (21) are altered by changing the switching positions of the controllable switching device (1), so that there is an altered reception signal (23) at the aerial connection point (22), and the indicator signal (10) is fed to the switching device (11) and in the event of reception interference in the reception signal (23) or in the IF signal (19) the controllable switching device (11) adopts a different switching position, and in collaboration with the interference detector (18) the change to the switching positions is maintained until a reception signal with sufficiently low interference is present at the aerial connection point (22) and the interference detector does not indicate any interference,
**characterised in that** the interference detector (18) is housed in the receiver (20) and the aerial array (21) with a controllable switching device contains a plurality of individual aerials (A1, A2, ...) or aerial parts and the switching device (11) with controllable selector switches (5) and/or controllable changeover switches (8), and a lead (24) located between the aerial array (21) with controllable switching device and the receiver (20) is designed as a transmission pathway for different signals, through which the indicator signal (10) is fed to the aerial array (21) with controllable switching device in order to actuate the switching device (11), and if reception interference occurs in the reception signal (23) or in the IF signal (19), at least one of the switches (5, 8) adopts a different switching position and selection measures are taken so that the additional transmission of the indicator signal (10) along this lead does not cause any interference.

2. Receiving aerial scanning diversity system according to claim 1,
**characterised in that** the indicator signal (10) in the receiver (20) is used to make the switch-over process inaudible without any time loss, in the event of reception interference, by muting the receiver or producing a soft switch-over.

3. Receiving aerial scanning diversity system according to claim 2,
**characterised in that** the interference recognition and the muting measures are tuned to each other in a cohesive design.

4. Receiving aerial scanning diversity system according to claims 1 to 3,
**characterised in that** a binary control signal (26) is derived from the indicator signal (10) for actuating the switching device (11) (Figure 1).

5. Receiving aerial scanning diversity system according to claim 4,
**characterised in that** a pulse (26) for actuating the switching device (11) is obtained from the indicator signal (10) by differentiation of the response flank.

6. Receiving aerial scanning diversity system according to one of claims 4 or 5, **characterised in that** a high frequency generator (27) is provided in the receiver (20) and its signal forms a high frequency signal burst (28) by weighting with the indicator signal (10) or a control signal (26) derived therefrom, this signal burst (28) being evaluated in the aerial array with controllable switching device (21) and being sent to the switching device (11) in order to actuate it.

7. Receiving aerial scanning diversity system according to claim 6,
**characterised in that** the high frequency oscillation in the signal burst is formed by the intermediate frequency signal (19) of the receiver as a result of the indicator signal (10) switching the intermediate frequency signal of the receiver through to the signal lead (24) by means of an electronic switch (25) (Figure 3).

8. Receiving aerial scanning diversity system according to one of claims 1 to 3, **characterised in that** the indicator signal (10) indicates the switching states in the form of a d.c. voltage code (Figure 1).

9. Receiving aerial scanning diversity system according to one of claims 1 to 8, **characterised in that** the aerial lead (12) is also the signal lead (24) and the indicator signal (10) is superimposed on the high frequency reception signal (23) at the receiver input and is supplied to the aerial array (21) with controllable switching device via the aerial lead (122), and **in that** measures are taken to ensure that the indicator signal (10) on the aerial lead (12) does not cause any interference in the receiver (20).

10. Receiving aerial scanning diversity system according to claim 9,
**characterised in that** in the aerial array (21) with controllable switching device, a selector circuit (13) is connected between the aerial lead (12) and the switching device (11) and a selector circuit (13) is also connected in the receiver (20) between the interference detector (18) and the aerial lead (12), these selector circuits (13) allowing only the indicator signal (10) or signals (26) or (28) derived therefrom to pass through, in frequency-selective manner, and **in that** the aerial lead is not substantially loaded by its impedance (Figure 2 and 3).

11. Receiving aerial scanning diversity system according to one of claims 1 to 10, **characterised in that** the switching device (11) contained in the aerial array (21) with controllable switching device forms control signals (9) at its output, which adjust the switching positions of the selector switches (5) or changeover switches (8), and **in that** in the event of the interference detector (18) indicating interference the control signals (9) are changed so that at least one of the switches (5, 8) is operated.

12. Receiving aerial scanning diversity system according to claim 11,
**characterised in that** the switching device (11) forms control signals (9) at its outputs such that different switching positions of the selector switches (5) and changeover switches (8) are set in a predetermined, cyclically repeated manner.

13. Receiving aerial scanning diversity system according to one of claims 1 to 7, **characterised in that** the signal lead (24) simultaneously serves to supply d.c. voltage to the controllable switching device (11).

14. Receiving aerial scanning diversity system according to one of claims 1 to 7, **characterised in that** the signal lead (24) is formed by an optical fibre in multiple use.

15. Receiving aerial scanning diversity system according to one of claims 1 to 14, **characterised in that** a selector switch (5) is provided at the aerial connecting point (22), which connects the outputs of different individual aerials A1, A2,... to the aerial connecting point (22) (Figure 4, 5).

16. Receiving aerial scanning diversity system according to one of claims 1 to 15, **characterised in that** aerial part connectors (14) are provided which are loaded with different impedances (7) by changeover switches (8).

17. Receiving aerial scanning diversity system according to one of claims 1 to 16, **characterised in that** aerial part connectors (14) are provided which are connected by changeover switches (8) (Figure 1).

18. Receiving aerial scanning diversity system according to claim 16,
**characterised in that** in order to subject the aerial part connectors (14) to different impedances (7) electronically controllable changeover switches (8) are used which are switched to open or closed by the switching device (11).

19. Receiving aerial scanning diversity system according to one of claims 1 to 18, **characterised in that** aerials are essentially formed by the heating panel (6) in the window pane (1) of a motor vehicle and different aerial part connections (14) and (15) are formed by being connected to this heating panel (6), and amplifiers (2) are connected to some of these aerial part connections (15) to form active aerials which are connected at their output to the selector switch (5) (Figure 5).

20. Receiving aerial scanning diversity system according to claim 19,
**characterised in that** the other aerial part connections (14) are loaded with different impedances (7), preferably with reactances, by means of controllable electronic changeover switches (8).

21. Receiving aerial scanning diversity system according to claim 20,
**characterised in that** at least one of the aerial part connections (14) is loaded with different impedances (7) by means of a selector switch (5) (Figure 5).

## Revendications

1. Système de multiplexage pour antennes de réception pour la gamme des ondes métriques, par exemple pour la gamme des ondes ultra-courtes dans des véhicules, avec une installation d'antenne (21) avec dispositif de commutation à commande et un récepteur installé à distance et connecté par l'intermédiaire d'une descente d'antenne et un détecteur de perturbations (18), lequel, en cas de survenance d'une perturbation de réception dans le signal de réception (23) et/ou le signal de fréquence intermédiaire (19), indique cette dernière par l'intermédiaire d'un signal indicateur, sachant que l'installation d'antenne (21) avec dispositif de commutation à commande ainsi qu'une prise d'antenne commune (22) auxquelles le récepteur (20) est connecté par l'intermédiaire de la descente d'antenne (12) et d'autres lignes, sont disponibles, et sachant que les propriétés de réception de l'installation d'antenne (21) peuvent être modifiées par changement des positions de commutation du dispositif de commutation à commande (11), de telle sorte qu'un signal de réception modifié (23) apparaisse à chaque fois sur la prise d'antenne (22) et que le signal indicateur (10) soit transmis au dispositif de commutation (11) et qu'en cas de survenance d'une perturbation de réception au sein du signal de réception (23) ou du signal de fréquence intermédiaire (19), le dispositif de commutation à commande (11) procède à un changement de position de commutation et qu'en collaboration avec le détecteur de perturbations (18) la modification des positions de commutation soit poursuivie jusqu'à ce qu'un signal de réception suffisamment faible en perturbations apparaisse sur la prise d'antenne (22) et que le détecteur de perturbation (18) n'indique plus de perturbations, **caractérisé en ce que** le détecteur de perturbations (18) est logé dans le récepteur (20) et que l'installation d'antenne (21) avec dispositif de commutation à commande comporte plusieurs antennes individuelles (A1, A2...) et/ou parties d'antennes et le dispositif de commutation (11) avec des contacts de sélection à commande (5) et/ou des contacts de commutation à commande (8) et qu'une ligne (24) se trouvant entre l'installation d'antenne (21) avec dispositif de commutation à commande et le récepteur (20) est configurée en tant que voie de transmission pour divers signaux, par l'intermédiaire de laquelle le signal indicateur (10) est transmis à l'installation d'antenne (21) avec dispositif de commutation à commande pour la commande du dispositif de commutation (11) et qu'en cas de survenance d'une perturbation de réception au sein du signal de réception (23) ou du signal de fréquence intermédiaire (19) au moins un des contacts (5, 8) procède à un changement de position de commutation et que des mesures de sélection sont prises, de sorte que la transmission supplémentaire du signal indicateur (10) n'engendre pas de perturbations sur cette ligne.

2. Système de multiplexage pour antennes de réception selon la revendication 1, **caractérisé en ce que** le signal indicateur (10) disponible dans le récepteur (20) est utilisé, en cas de survenance d'une perturbation de réception, pour rendre le processus de commutation inaudible sans perte de temps, dans la mesure où il provoque une commutation silencieuse du récepteur et/ou une commutation en douceur.

3. Système de multiplexage pour antennes de réception selon la revendication 2, **caractérisé en ce que** la détection de la perturbation et les mesures de commutation silencieuse sont accordées entre elles au sein d'un concept de corrélation.

4. Système de multiplexage pour antennes de réception selon les revendications 1 à 3, **caractérisé en ce qu'**un signal de commande binaire (26) est dérivé du signal indicateur (10) pour la commande du dispositif de commutation (11) (figure 1).

5. Système de multiplexage pour antennes de réception selon la revendication 4, **caractérisé en ce qu'**une impulsion (26) pour la commande du dispositif de commutation (11) est obtenue à partir du signal indicateur (10) par différentiation du flanc de réponse.

6. Système de multiplexage pour antennes de réception selon l'une des revendications 4 ou 5, **caractérisé en ce qu'**un générateur à haute fréquence (27) est présent dans le récepteur (20) et que son signal forme un paquet de signaux à haute fréquence (28) par évaluation à l'aide du signal indicateur (10) ou d'un signal de commande (26) qui en est dérivé, lequel est évalué dans l'installation d'antenne (21) avec dispositif de commutation à commande et transmis, aux fins de commande, au dispositif de commutation (11).

7. Système de multiplexage pour antennes de réception selon la revendication 6, **caractérisé en ce que** l'oscillation à haute fréquence dans le paquet de signaux est formée par le signal de fréquence intermédiaire (19) du récepteur du fait que le signal indicateur (10) interconnecte le signal de fréquence intermédiaire du récepteur vers la ligne de signal (24) par l'intermédiaire d'un commutateur électronique (25) (figure 3).

8. Système de multiplexage pour antennes de réception selon l'une quelconque des revendications 1 à 3, **caractérisé en ce que** le signal indicateur (10) transmet les états de commutation sous forme d'un codage en tension continue (figure 1).

9. Système de multiplexage pour antennes de réception selon l'une quelconque des revendications 1 à 8, **caractérisé en ce que** la descente d'antenne (12) est en même temps la ligne de signal (24) et que le signal indicateur (10) se superpose au signal de réception à haute fréquence (23) à l'entrée du récepteur et est transmis à l'installation d'antenne (21) avec dispositif de commutation à commande par l'intermédiaire de la descente d'antenne (12) et que des mesures sont prises pour que le signal indicateur (10) ne provoque pas de perturbations sur la descente d'antenne (12) dans le récepteur (20).

10. Système de multiplexage pour antennes de réception selon la revendication 9, **caractérisé en ce que** dans l'installation d'antenne (21) avec dispositif de commutation à commande, une commutation de sélection (13) est connectée entre la descente d'antenne (12) et le dispositif de commutation (11) et que dans le récepteur (20) une commutation de sélection (13) est également connectée entre le détecteur de perturbations (18) et la descente d'antenne (12), lesquelles ne laissent passer, en fonction de la sélection de fréquence, que le signal indicateur (10) ou les signaux (26) ou (28) qui en sont dérivés et que la descente d'antenne avec son impédance ne subit pas de contrainte sensible(figures 2 et 3).

11. Système de multiplexage pour antennes de réception selon l'une quelconque des revendications 1 à 10, **caractérisé en ce que** le dispositif de commutation (11), intégré dans l'installation d'antenne (21) avec dispositif de commutation à commande, forme des signaux de commande (9) à sa sortie, lesquels règlent les positions de commutation des contacts de sélection (5) ou des contacts de commutation (8) et que les signaux de commande (9) sont, en cas d'indication d'une perturbation par le détecteur de perturbations (18), modifiés de telle sorte qu'au moins un des contacts (5, 8) commute.

12. Système de multiplexage pour antennes de réception selon la revendication 11, **caractérisé en ce que** le dispositif de commutation (11) forme à ses sorties des signaux de commande (9) de telle manière que diverses positions de commutation des contacts de sélection (5) ou des contacts de commutation (8) peuvent être cycliquement répétées d'une manière prédéfinie.

13. Système de multiplexage pour antennes de réception selon l'une quelconque des revendications 1 à 7, **caractérisé en ce que** la ligne de signal (24) sert en même temps à l'alimentation en tension continue du dispositif de commutation (11).

14. Système de multiplexage pour antennes de réception selon l'une quelconque des revendications 1 à 7, **caractérisé en ce que** la ligne de signal (24) est configurée sous forme de fibre optique à plusieurs utilisateurs.

15. Système de multiplexage pour antennes de réception selon l'une quelconque des revendications 1 à 14, **caractérisé en ce que** la prise d'antenne (22) comporte un contact de sélection (5) qui relie les sorties des différentes antennes individuelles A1, A2... à la prise d'antenne (22)(figures 4, 5).

16. Système de multiplexage pour antennes de réception selon l'une quelconque des revendications 1 à 15, **caractérisé en ce qu'**il existe des prises d'antennes partielles (14), lesquelles peuvent subir des contraintes avec différentes impédances (7) de la part du contact de commutation (8).

17. Système de multiplexage pour antennes de réception selon l'une quelconque des revendications 1 à 16, **caractérisé en ce que** des prises d'antennes partielles (14) sont prévues qui peuvent être reliées au moyen de contacts de commutation (8) (figure 1).

18. Système de multiplexage pour antennes de réception selon la revendication 16, **caractérisé en ce que** pour la commutation des prises d'antennes partielles (14) avec différentes impédances (7), on utilise des contacts de commutation (8) à commande électronique, qui peuvent être commutés par le dispositif de commutation (11) sur les positions passage et/ou fermeture.

19. Système de multiplexage pour antennes de réception selon l'une quelconque des revendications 1 à 18, **caractérisé en ce que** des antennes sont formées pour l'essentiel par le champ de chauffage (6) intégré dans la vitre (1) d'un véhicule et que différentes prises d'antennes partielles (14) et/ou (15) sont formées par des connexions à ce champ de chauffage (6) et que des amplificateurs (2) sont connectés sur quelques-unes de ces prises d'antennes partielles (15) pour la formation d'antennes actives, lesquelles sont connectées par leur sortie avec le contact de sélection (5) (figure 5).

20. Système de multiplexage pour antennes de réception selon la revendication 19, **caractérisé en ce que** les autres prises d'antennes partielles (14) sont soumises à une contrainte avec différentes impédances (7), de préférence avec des réactances, à l'aide de contacts de commutation à commande électronique (8).

21. Système de multiplexage pour antennes de réception selon la revendication 20, **caractérisé en ce qu'**au moins l'une des prises d'antennes partielles (14) est soumise à une contrainte avec différentes impédances (7), à l'aide d'un contact de sélection (5)(figure 5).
